# EUROPÄISCHE PATENTSCHRIFT

(11) **EP 2 404 814 B1**
(45) Veröffentlichungstag und Bekanntmachung des Hinweises auf die Patenterteilung: **15.07.2015**
(21) Anmeldenummer: 11002332.2
(22) Anmeldetag: 22.03.2011
(51) Int. Cl.: B62D 25/16, B62D 25/18

(54) **Kotflügel für ein Nutzfahrzeug**
Wing for a commercial vehicle
Aile pour un véhicule utilitaire

(30) Priorität: 07.07.2010 DE 102010026402
(43) Veröffentlichungstag der Anmeldung: 11.01.2012
(73) Patentinhaber: MAN Truck & Bus AG, 80995 München (DE)
(72) Erfinder: Kraus, Alfons, 83624 Otterfing (DE); Albertshofer, Günter, 81929 München (DE); Menrath, Petra, 85757 Karlsfeld (DE)

(56) Entgegenhaltungen:
- EP-A2- 0 791 526
- EP-A2- 1 564 115
- DE-A1- 19 914 460
- DE-A1-102006 003 696
- FR-A1- 2 584 669
- JP-A- H 107 028

## Beschreibung

Die Erfindung bezieht sich auf einen Kotflügel für ein Nutzfahrzeug mit einem rückwärtigen Schenkel, an dem ein Spritzschutz befestigt ist, dessen Unterkante von der Unterkante des Schenkels beabstandet ist und auf ein Nutzfahrzeug mit dem erfindungsgemäßen Kotflügel.

Aus der DE 44 20 190 A1 ist ein Spritzschutz für ein Fahrzeug bekannt, der aus einem Halter und einem Spritzlappen besteht. Der Spritzlappen ist oben mit einem Wulst zur Aufnahme in einem, im Halter angeordneten Komplimentprofil versehen. Der Wulst weist an beiden Enden eine federnde Zunge auf, die im montierten Zustand des Spritzlappens innerhalb der Querschnittkontur des Komplimentprofils liegt und eine axiale Sicherung in der Einführungs- und Auszugsrichtung bewirkt. Bei der Montage des Spritzlappens wird der Wulst in das Komplimentprofil eingeschoben, wobei die federnde Zunge innerhalb der Querschnittskontur des Komplimentprofils eingedrückt wird. Wenn der Spritzlappen seine endgültige Einbaulage eingenommen hat, federt oder rastet die federnde Zunge bis zum Vorstehen am Halter aus, um dadurch den Spritzlappen gegen Verschieben zu sichern. Nachteilig ist jedoch, dass typgleiche Nutzfahrzeuge je nach Ausführung als Offroadfahrzeug, Aufliegerfahrzeug oder Gliederzug oder je nach Raddurchmesser mit Spritzschutz-Lappen unterschiedlicher Größe ausgerüstet werden müssen.

DE 199 14 460 A1 offenbart eine Vorrichtung zur Beseitigung störender Sprühwasserbildung durch Fahrzeugreifen, die ein flächiges Trägerteil für faden-, band- und/oder stabartig ausgebildete Einzelelemente bildet, welche eine ein- oder mehrlagige Schicht bilden, die mit Abstand zum flächigen Trägerteil angeordnet ist. Als Stand der Technik sind ferner die JP H10 7028 A, die FR 2 584 669 A1 und die DE 10 2006 003696 A1 zu nennen.

Es ist daher die Aufgabe der Erfindung, einen Spritzschutz für ein Nutzfahrzeug bereitzustellen, der von der Beladung des Fahrzeugs, der Absenkung der Ladehöhe oder dem Reifendurchmesser unabhängig ist.

Die Aufgabe wird erfindungsgemäß durch die Merkmale der Ansprüche 1 und 2 gelöst.

Erfindungsgemäß ist am rückwärtigen Schenkel des Kotflügels des Nutzfahrzeugs ein Spritzschutz befestigt. Der Kotflügel überspannt dabei bereichsweise von oben die Lauffläche des Rades und ist in Fahrtrichtung gesehen, vorne und hinten in einen vorderseitigen beziehungsweise rückwärtigen Schenkel unterteilt. Auf der Oberseite des Rades verbindet ein Kotflügelrücken die beiden Schenkel miteinander. In Fahrtrichtung gesehenen an der Außenseite des Rades bedeckt der Kotflügel bereichsweise auch die Seitenwange des Reifens. Der Spritzschutz ist am rückwärtigen Schenkel des Kotflügels befestigt und ragt von der Unterkante des Schenkels in Richtung auf die Fahrbahn ab. Die Unterkante des Spritzschutzes ist dabei von der Unterkante des Schenkels beabstandet. Das vom Reifenprofil aufgewirbelte Wasser wird durch die Drehbewegung des Rades nach hinten oben weggeschleudert und trifft auf der Innenseite des Spritzschutzes auf. An der Innenseite des Spritzschutzes sind seitlich verlaufende Rippen angebracht, die ein Ablaufen des aufgewirbelten Wassers zur Fahrzeuginnenseite hin begünstigen. Im Weiteren wird der auf der Straße befindliche Niederschlag als Wasser bezeichnet, es ist jedoch grundsätzlich jede Art von Niederschlag gemeint, wie er sich auf einer Straße befinden kann. Der Spritzschutz ist am rückwärtigen Schenkel des Kotflügels befestigt. Die Befestigung kann auf der dem Rad zugewandten Innenseite des Kotflügels oder auf der Kotflügel-Außenseite erfolgen. Denkbar ist auch, dass der Spritzschutz in einer Ausnehmung zwischen eine Kotflügel-Außenwand und eine Kotflügel-Innenwand eingeführt und dort befestigt ist. Der erfindungsgemäße Spritzschutz entspricht in seiner Breite ungefähr der Lauffläche des Rades. Unabhängig vom Raddurchmesser und losgelöst davon, ob das Nutzfahrzeug oder der Trailer in der Höhe abgesenkt ist, ist ein Spritzschutz mit einheitlicher Länge einsetzbar. Erfindungsgemäß ist der Spritzschutz vertikal verschiebbar innen oder außen am rückwärtigen Schenkel des Kotflügels befestigt und kann vertikal von der Fahrbahn weg nach oben in den Kotflügel hinein verschoben und befestigt werden. Somit ist der Abstand zwischen der Unterkante des Spritzschutzes und der Unterkante des Schenkels variierbar. In gleicher Weise kann der Abstand zwischen der Unterkante des Spritzschutzes und der Fahrbahnoberfläche dem jeweiligen Bedarf angepasst werden. Einer Beschädigung des Spritzschutzes durch Aufstoßen auf der Fahrbahn oder durch Abreißen kann somit wirksam entgegengetreten werden. Das aufgewirbelte Spritzwasser wird zwischen den Rahmenlängsträgern auf den Fahrbahnboden abgeleitet. Der Spritzschutz ist verliersicher am rückwärtigen Schenkel des Kotflügels befestigt.

Nach der Erfindung ist der Spritzschutz am Schenkel schienengeführt verschiebbar. Je nachdem,. ob die Schienen am Schenkel oder am Spritzschutz angeordnet sind, erfolgt eine Befestigung zwischen dem Spritzschutz und dem Schenkel über Stifte, Haken oder Rasten. Diese Aufzählung ist nur beispielhaft gemeint, so dass auch andere Befestigungsmittel eingesetzt werden können.

Die Erfindung sieht vor, dass an den Schienen Markierungen angebracht sind, die den unterschiedlichen Radgrößen entsprechen, die für das erfindungsgemäße Nutzfahrzeug zugelassen sind.

Weitere Vorteile, Ausgestaltungen und zweckmäßige Fortbildungen des erfindungsgemäßen Kotflügels sind aus den nachstehenden Beispielsbeschreibungen anhand der Zeichnungen entnehmbar.

In der Zeichnung zeigen:

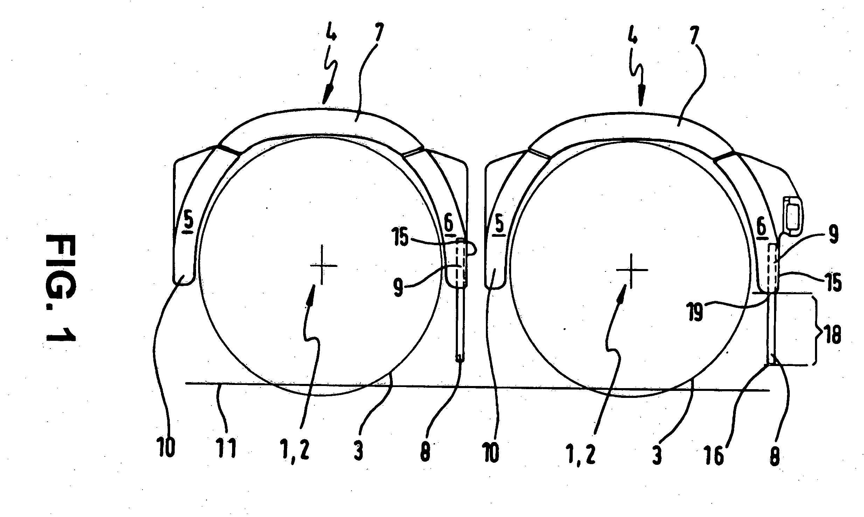

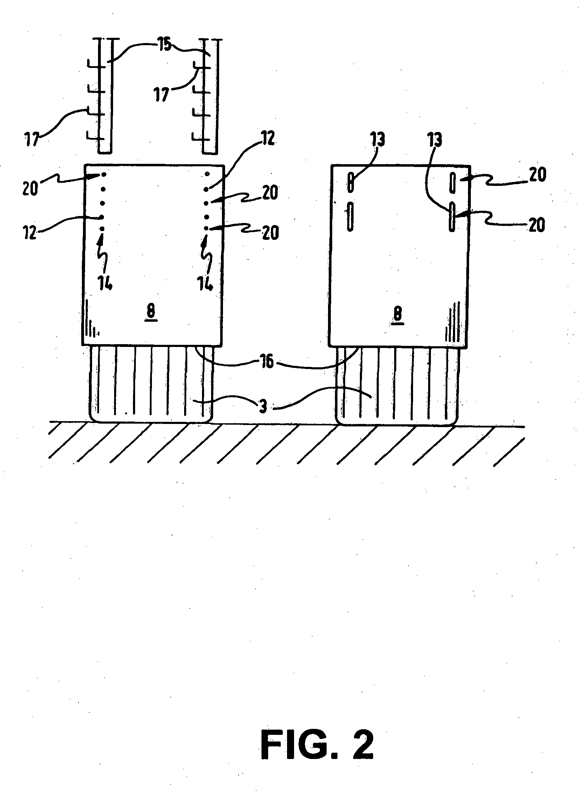

Figur 1 in seitlicher Darstellung zwei erfindungsgemäße Kotflügel mit je einem Spritzschutz und Figur 2 im Vorder- oder Rückansicht zwei Beispiele für einen Spritzschutz.

In Figur 1 sind in Seitenansicht eine Achse 1 und eine weitere Vorlauf- oder Nachlaufachse 2 dargestellt. Oberhalb der Räder 3 sind die Kotflügel 4 angeordnet, die jeweils einen vorderen Schenkel 5, einen rückwärtigen Schenkel 6 und einen, beide Schenkel 5; 6 verbindenden Rücken 7 aufweisen. An den rückwärtigen Schenkeln 6 ist jeweils ein Spritzschutz 8 dargestellt, der mit einem festen Ende 9 in einen rückwärtigen Schenkel 6 des Kotflügels 4 hineinragt und mit einem freien Ende 10 in Richtung auf die Fahrbahn 11 absteht.

Figur 2 zeigt zwei Beispiele für einen Spritzschutz 8 in Vorder- oder Rückansicht. In seiner linken Darstellung zeigt der Spritzschutz 8 zwei Reihen 14 von kreisförmigen Durchbrüchen 12, die zur Befestigung an Schienen 15 für die Aufnahme von Haken oder Bolzen oder Ähnlichem vorgesehen sind. In der linken Darstellung des Spritzschutzes 8 sind beispielhaft und keineswegs ausschließlich gemeint auf fünf Ebenen 20 nebeneinander jeweils zwei Durchbrüche 12 dargestellt.

In der rechten Darstellung ist in Figur 2 ein Spritzschutz 8 gezeigt, in dem auf zwei Ebenen 20 je ein länglicher Durchbruch 13 nebeneinander dargestellt ist. Die Durchbrüche 13 dienen dem Durchtritt von Haken, die für die Befestigung an den Schienen 15 (nicht gezeigt) vorgesehen sind. Unter der Unterkante 16 des Spritzschutzes 8 ragt der bodenseitige Bereich des Rades 3 hervor. In Abhängigkeit davon, welche Ebene 20 der Durchbrüche 12 ; 13 im Spritzschutz 8 für den Durchtritt der Verbindungsmittel 17 zur Befestigung an den Schienen 15 gewählt wird, ist der Abstand 18 zwischen der Unterkante 16 des Spritzschutzes 8 und der Unterkante 19 des rückwärtigen Schenkels 6 variierbar.

### Bezugszeichen

- 1: Achse
- 2: weitere Achse
- 3: Fahrt
- 4: Kotflügel
- 5: vorderer Schenkel
- 6: rückwärtiger Schenkel
- 7: Rücken
- 8: Spritzschutz
- 9: festes Ende
- 10: freies Ende
- 11: Fahrbahn
- 12: kreisförmiger Durchbruch
- 13: länglicher Durchbruch
- 14: Ebene der Durchbrüche
- 15: Schiene
- 16: Unterkante Spritzschutz
- 17: Verbindungsmittel
- 18: Abstand
- 19: Unterkante rückwärtiger Schenkel
- 20: Ebene

## Patentansprüche

1. Kotflügel für ein Nutzfahrzeug mit einem rückwärtigem Schenkel (6), an dem ein Spritzschutz (8) befestigt ist, dessen Unterkante (16) von der Unterkante (19) des Schenkels (6) beabstandet ist, wobei der Abstand (18) zwischen der Unterkante (16) des Spritzschutzes (8) und der Unterkante (19) des Schenkels (6) variierbar ist und der Spritzschutz (8) am Schenkel (6) an Schienen (15) geführt verschiebbar ist, **dadurch gekennzeichnet, dass** der Spritzschutz (8) vertikal verschiebbar am Kotflügel (4) befestigt ist und an den Schienen (15) Markierungen angeordnet sind, die zugelassenen Raddurchmessern entsprechen.

2. Nutzfahrzeug, mit einem Kotflügel (4) nach Anspruch 1.

## Claims

1. A wing for a commercial vehicle, with a rear limb (6) to which a splash guard (8) is fastened, the lower edge (16) of which is spaced apart from the lower edge (19) of the limb (6), wherein the distance (18) between the lower edge (16) of the splash guard (8) and the lower edge (19) of the limb (6) is variable and the splash guard (8) is displaceable on the limb (6) in a manner guided on rails (15), **characterized in that** the splash guard (8) is fastened to the wing (4) in a vertically displaceable manner and markings corresponding to permitted wheel diameters are arranged on the rails (15).

2. The commercial vehicle with a wing (4) according to Claim 1.

## Revendications

1. Aile pour un véhicule utilitaire comprenant une branche arrière (6) à laquelle est fixée une protection contre les éclaboussures (8), dont le bord inférieur (16) est espacé du bord inférieur (19) de la branche (6), la distance (18) entre le bord inférieur (16) de la protection contre les éclaboussures (8) et le bord inférieur (19) de la branche (6) étant variable et la protection contre les éclaboussures (8) sur la branche (6) pouvant être déplacée de manière guidée sur des rails (15), **caractérisée en ce que** la protection contre les éclaboussures (8) est fixée à l'aile (4) de manière déplaçable verticalement et des marquages sont disposés sur les rails (15), lesquels correspondent aux diamètres de roue autorisés.

2. Véhicule utilitaire comprenant une aile (4) selon la revendication 1.
